(19) Europäisches Patentamt
European Patent Office
Office européen des brevets

(11) **EP 3 136 053 B1**

(12) **EUROPÄISCHE PATENTSCHRIFT**

(45) Veröffentlichungstag und Bekanntmachung des Hinweises auf die Patenterteilung:
**23.05.2018 Patentblatt 2018/21**

(51) Int Cl.:
***G01C 21/16*** *(2006.01)*     ***G01C 22/00*** *(2006.01)*
***A63B 29/02*** *(2006.01)*

(21) Anmeldenummer: **15182970.2**

(22) Anmeldetag: **28.08.2015**

(54) **LAWINENVERSCHÜTTETENSUCHGERÄT UND VERFAHREN ZUM BETRIEB EINES LAWINENVERSCHÜTTETENSUCHGERÄTS**

AVALANCHE TRANSCEIVER AND METHOD FOR OPERATING AN AVALANCHE TRANSCEIVER

DISPOSITIF ET PROCÉDÉ DE FONCTIONNEMENT D'UN DÉTECTEUR DE RECHERCHE DE VICTIMES EN AVALANCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.03.2017 Patentblatt 2017/09**

(73) Patentinhaber: **Mammut Sports Group AG**
**5703 Seon (CH)**

(72) Erfinder:
• **Dammert, Ilari**
**CH-8047 Zürich (CH)**
• **Klingelhöfer, Pascal**
**CH-8583 Sulgen (CH)**
• **Küng, Roland**
**CH-8633 Wolfhausen (CH)**
• **Rennhard, Patrick**
**CH-8414 Buch am Irchel (CH)**

(74) Vertreter: **Schirbach, Marcel**
**Weinmann Zimmerli**
**Apollostrasse 2**
**Postfach 1021**
**8032 Zürich (CH)**

(56) Entgegenhaltungen:
WO-A1-2016/062337    CH-A1- 703 352
DE-A1- 19 946 212    DE-A1-102011 003 154

## Beschreibung

Die vorliegende Erfindung fällt in das Gebiet der Navigationsgeräte; sie betrifft ein Lawinenverschüttetensuchgerät, umfassend eine Sende-/Empfangseinheit, mindestens eine Sende-/Empfangsantenne, eine Magnetfelddistanzeinheit zur Bestimmung einer Magnetfelddistanz $D_H$ aus empfangenen Funksignalen und eine Magnetfeldwinkeleinheit zur Bestimmung eines Magnetfeldwinkels $\measuredangle_H$ aus der Feldvektorrichtung von empfangenen Funksignalen, wobei die Magnetfelddistanzeinheit und die Magnetfeldwinkeleinheit ausgangsseitig mit einer Such-Navigationseinheit und einer Anzeige verbindbar sind; ferner betrifft die Erfindung ein Verfahren zum Betrieb eines Lawinenverschüttetensuchgeräts, welches mit einer Sende-/Empfangseinheit ausgestattet ist, wobei die Sende-/Empfangseinheit mindestens eine Sende-/Empfangsantenne zum Aussenden und Empfangen von Funksignalen umfasst, des Weiteren eine Magnetfelddistanzeinheit zur Bestimmung einer Magnetfelddistanz $D_H$ aus empfangenen Funksignalen aufweist und eine Magnetfeldwinkeleinheit zur Bestimmung eines Magnetfeldwinkels $\measuredangle_H$ aus der Feldvektorrichtung von empfangenen Funksignalen aufweist, wobei die Magnetfelddistanz $D_H$ und der Magnetfeldwinkel $\measuredangle_H$ an eine Such-Navigationseinheit übergeben werden, welche mit einer Anzeige verbindbar ist.

## Stand der Technik

Navigationsgeräte sind in verschiedenen Ausführungen für unterschiedliche Einsatzbereichen wie bei Fahrzeugen, Flugzeugen, auf Schiffen oder für Fussgänger bekannt, wobei auch in jedem genannten Einsatzbereich unterschiedliche Ausführungsformen entsprechend den Umgebungsbedingungen bzw. den einsetzbaren Messsystemen dem Fachmann vertraut sind. Vorliegend ist der Fokus auf ein Navigationsgerät gerichtet, dass im weitesten Sinn bei Fussgängern zum Einsatz gelangt; im speziellen zielt die vorliegende Erfindung auf ein Lawinenverschüttetensuchgerät, wie es beispielsweise zur Rettung von durch Schneelawinen Verschütteten im Wintersport eingesetzt wird.

Im Fall eines Lawinenereignisses sendet ein solches Lawinenverschüttetensuchgerät eines Verschütteten periodisch mit Hilfe einer Sende-/Empfangsantenne ein kurzes Trägersignal aus, und zwar beispielsweise bei einer standardisierten Frequenz von 457 kHz. Das hierdurch erzeugte Magnetfeld ist im Umkreis von mehreren 10 Meter empfangbar. Der Magnetfeldpegel ist dabei umgekehrt proportional zur Magnetfelddistanz und die Feldvektorrichtung zeigt stets entlang einer Magnetfeldlinie, welche sich mit allen anderen Magnetfeldlinien in der Sende-/Empfangsantenne beim Verschütteten treffen. Die Magnetfeldlinien bilden dabei Ellipsen in den Schnittflächen des durch die Sendeantenne erzeugten Solenoids.

Bei der Suche folgt eine Suchperson der auf seinem Lawinenverschüttetensuchgerät angezeigten Richtung des Magnetfeldvektors, wobei sich die Suchperson anhand der angezeigten Magnetfelddistanz über den Fortschritt der Annäherung informieren kann. Pro Sekunde erhält die Suchperson einen neuen Messwert zur Magnetfelddistanz und alle 200ms einen Magnetfeldwinkel. Sind mehrere Verschüttete zu suchen, so senden mehrere Lawinenverschüttetensuchgeräte gleiche Trägersignale aus, welche sich trotz ihrer kurzen Signaldauer immer wieder überlagern können und damit die Suche während einer gewissen Anzahl Sekunden (typ. 5s) erschweren bzw. sogar verhindern, und zwar bis die Taktgeber der Lawinenverschüttetensuchgeräte durch ihre Drift dazu führen, dass die relative Tonsignal-Pulslage nicht mehr deckungsgleich ist. In diesem Zeitintervall einer Überlagerung von mehreren Trägersignalen bleibt einer ungeübten Suchperson meistens nur das Abwarten bzw. Stehenbleiben als Lösung, bis wieder Tonsignale eines einzelnen Lawinenverschüttetensuchgeräts erfassbar sind. Ferner kann es vorkommen, dass aufgrund von Umgebungseinflüssen ein Trägersignal eines Lawinenverschüttetensuchgeräts in einem Zeitintervall gar nicht erfasst werden kann. Jedenfalls können solche Störungen bzw. Unterbrüche bei der Trägersignalerfassung zu Verunsicherung und in der Folge sogar zu Fehlverhalten der Suchperson führen.

In US 5,583,776 A (Levi) ist ein Navigationsgerät für Fussgänger, insbesondere für Wanderer offenbart. Dieses bekannte Navigationsgerät verwendet "Global-Positioning-System"-Signale -im Folgenden kurz "GPS- Signale" bezeichnet- in einer Koppelnavigation mit einem Schrittzähler, um die Wegführung auch bei Unterbruch des GPS-Signals zu ermöglichen. Es wird darauf hingewiesen, dass ein GPS in Kombination mit einem Schrittzähler und einer Inertialsensoreneinheit, umfassend ein dreiachsiges Gyroskop und Beschleunigungssensoren in allen drei Raumachsen und/oder einen Kompass, Verwendung finden. Durch eine Doppelintegration der Beschleunigungen erhält man die Zieldistanz und durch die Integration der Drehraten die Lage. Das Gyroskop dient auch zur Eliminierung der Erdgravitation bei den Beschleunigungssensoren. Wegen der grossen Drift als Folge der Doppelintegration der Beschleunigungswerte wird vorgeschlagen, einen Schrittzähler für die Distanzschätzung aus der Schrittweite zu benutzen. Die Schrittweite wird vorliegend aus der Schrittfrequenz abgeschätzt, da ein nahezu linearer Zusammenhang zwischen beiden bestehen soll. Dieser Zusammenhang ist zutreffend, sofern von einer im Wesentlichen gleichförmigen Bewegung -beispielsweise der

eines Wanderers ausgegangen werden kann. Beim Wandern oder Bergwandern kann -zumindest abschnittsweise- von einer annähernd gleichförmigen Bewegung gesprochen werden, sodass der nahezu lineare Zusammenhang zwischen der herkömmlichen Erfassung der Schrittfrequenz und der daraus abgeleiteten Schrittweite Gültigkeit hat. Aus diesem Grund wird im vorliegenden Stand der Technik die Schrittfrequenz aus einer Mehrzahl aufeinander folgender Beschleunigungsmaxima ermittelt, beispielsweise mittels Fouriertransformation. Diese Fouriertransformation verlangt für eine aussagekräftige Ermittlung der Schrittfrequenz bzw. der Schrittweite aber eine lange Beobachtungsdauer, die eine gleichförmige Bewegung voraussetzen würde. Die in "Levi" beschriebene Schrittdetektion aus dem Beschleunigungssignal ist in ihrer Einfachheit nicht auf eine Lawinenverschüttetensuche anwendbar, da bei letzterer vor allem ein weicher Untergrund und die Trageart in der Hand zu einem schwachen und zudem stark im Pegel variablen Signal führen könnte und deshalb eine Schrittdetektion verunmöglichen oder viele Fehldetektionen von Schritten durch Störausschläge aufzeigen könnte.

Bei Bewegungen in unwegsamen Gelände -wie beispielsweise bei der Suche nach einem Verschütteten in einem Lawinenkegel- muss davon ausgegangen werden, dass der beschrittene Untergrund von Schritt zu Schritt unterschiedlich ist. Die Erfassung einer Schrittfrequenz über eine Mehrzahl von Schritten gemäss dem Stand der Technik kann hier für die Bestimmung einer Schrittweite nur ungenügend herangezogen werden. Im Wesentlichen ist jeder Schritt in unwegsamem Gelände individuell und muss somit auch individuell ermittelt werden. Hinzu kommt, dass es bei der Verschüttetensuche wegen des Untergrunds zu Stürzen der Suchperson kommen kann, die von herkömmlichen Schrittzählern nicht als solche erkannt werden. Darüber hinaus kann es zu Drehbewegungen der Suchperson kommen, die sich zwecks Orientierung im Gelände nicht immer vorwärts bewegt. Die CH 703 352 A1 offenbart ein Lawinenverschüttetensuchgerät mit einer Magnetfelddistanzeinheit und einer Magnetfeldwinkeleinheit, die ausgangsseitig über eine Such-Navigationseinheit mit einer Anzeige verbunden sind.

Weitere Herausforderungen bei der Verschüttetensuche mittels herkömmlichen Lawinenverschüttetensuchgeräten bestehen in den verschiedenen Arten von getragenem, meist grobem Schuhwerk, ferner in der Tatsache, dass ein Lawinenverschüttetensuchgerät vorwiegend in der Hand einer Suchperson gehalten wird wodurch sich Schritte als Folge der starken Bedämpfung weniger deutlich erkennen lassen als bei Körpertragearten wie dies im Sport-/Freizeitbereich üblich ist. Ferner ist das Funksignal des Magnetfelds in grosser Distanz unzureichend genau bzw. kann durch den Gesteinsuntergrund verzerrt werden, so dass Distanzangaben aus dem Magnetfeld sprunghaft sein können. Bei mehreren Verschütteten kann zudem während einiger Zeit gar kein auswertbares Magnetfeldsignal erhalten werden, was die Suchperson zum Verweilen zwingt.

## Darstellung der Erfindung

Es ist deshalb Aufgabe der vorliegenden Erfindung, ein Lawinenverschüttetensuchgerät und ein Verfahren zum Betrieb eines Lawinenverschüttetensuchgeräts dahingehend weiterzubilden, dass gegenüber dem Stand der Technik eine genauere und damit schnellere Zielführung zu einem Verschütteten ermöglicht wird.

Die der Erfindung für das Lawinenverschüttetensuchgerät zugrundeliegende Aufgabe wird gelöst durch die Merkmale des Anspruchs 1; die diesen Erfindungsgedanken weiterbildenden Merkmale sind Gegenstand der Unteransprüche 2 bis 8.

Der Kern der vorliegenden Erfindung ist darin zu sehen, dass ein Lawinenverschüttetensuchgerät, umfassend eine Sende-/Empfangseinheit mit mindestens einer Sende-/Empfangsantenne, eine Magnetfelddistanzeinheit zur Bestimmung einer Magnetfelddistanz $D_H$ aus empfangenen Funksignalen und eine Magnetfeldwinkeleinheit zur Bestimmung eines Magnetfeldwinkels $\sphericalangle_H$ aus der Feldvektorrichtung von empfangenen Funksignalen, wobei die Magnetfelddistanzeinheit und die Magnetfeldwinkeleinheit ausgangsseitig über eine Such-Navigationseinheit mit einer Anzeige verbindbar sind, und das Lawinenverschüttetensuchgerät zusätzlich eine Inertialsensoreneinheit umfasst, welche ausgangsseitig über eine Schrittdauerbestimmungseinheit zur Bestimmung einer Schrittdauer $t_S$ und über eine Schrittlängenbestimmungseinheit zur Ermittlung einer ersten Schrittlänge $l_{SB}$-basierend im Wesentlichen auf einem Kontrollwinkel $\sphericalangle_G$ aus der Inertialsensoreneinheit, der Schrittdauer $t_S$ und Konstanten aus einer Konstanteneinheit- und zur Ermittlung einer zweiten Schrittlänge $l_{SH}$ -basierend im Wesentlichen auf dem Kontrollwinkel $\sphericalangle_G$ aus der Inertialsensoreneinheit, der Schrittdauer $t_S$ und der Magnetfelddistanz $D_H$- ebenfalls mit der Such-Navigationseinheit verbindbar ist.

Besonders hervorzuheben ist an dieser erfindungsgemässen Anordnung, dass mittels der Schrittdauerbestimmungseinheit die Schrittdauer $t_S$ eines jeden einzelnen Schritts bestimmbar ist und daraus nachfolgend die zugehörige Schrittlänge, namentlich die erste Schrittlänge $l_{SB}$ und die zweite Schrittlänge $l_{SH}$, die beide der Such-Navigationseinheit zur Weiterverarbeitung und Darstellung auf der Anzeige dient. Zudem ist natürlich auch eine Mittelwertbildung aus mehreren aufeinanderfolgenden Schrittlängen denkbar, sofern die Ausgabe aus der Schrittdauerbestimmungseinheit eine entsprechende Plausibilität zulässt. Mit Vorteil wird mit der Schrittdauerbestimmungseinheit ein Schrittanfang und ein zugehöriges Schrittende erfasst und daraus die zugehörige Schrittdauer und Schrittlänge bestimmt.

Sofern Funksignale mit der Sende-/Empfangseinheit erfassbar sind, funktionieren die Magnetfelddistanzeinheit und die Magnetfeldwinkeleinheit parallel zu der Schrittdauerbestimmungseinheit zur Bestimmung der Schrittdauer $t_S$ und der Schrittlängenbestimmungseinheit zur Ermittlung der ersten Schrittlänge ($l_{SB}$) und der zweiten Schrittlänge ($l_{SH}$), womit erfindungsgemäss eine Manöverüberwachung einer Suchperson durchführbar ist. Bei Ausfall von Funksignalen können neu die ermittelte Schrittdauer bzw. Schrittlänge der Such-Navigationseinheit Auskunft über die seit Ausfall der Funksignale zurückgelegte Wegstrecke geben und entsprechend zur Anzeige gebracht werden; das heisst, selbst bei Ausfall von Funksignalen wird die Suchperson weiter in Richtung eines Verschütteten geführt, was auf jede Suchperson - selbst auf eine geübte- beruhigend bzw. stressfrei wirkt. Die vor dem Funksignalausfall ermittelten Werte des Magnetfeldwinkels und der Magnetfelddistanz dienen dabei als Referenzdistanz und Referenzrichtung.

Vorteilhaft ist, dass die Magnetfeldwinkeleinheit und die Inertialsensoreneinheit über eine Schrittrichtungseinheit mit der Such-Navigationseinheit verbunden sind; die Schrittrichtungseinheit ermöglicht erfindungsgemäss eine Korrektur zwischen einem erfassten Magnetfeldwinkel $\measuredangle_H$ und einem Kontrollwinkel $\measuredangle_G$ aus der Inertialsensoreneinheit, so dass jede Drehbewegung des Suchgerätes bzw. des Suchenden korrigierbar wird. Ferner ist die Inertialsensoreneinheit über eine Sturzerkennungseinheit mit der Such-Navigationseinheit verbindbar, sodass mit Vorteil ein Sturz einer Suchperson detektierbar ist und entsprechend Berücksichtigung finden kann bei der Wegführung.

Eine besonders vorteilhafte Ausführungsform der Erfindung sieht vor, dass die Schrittdauerbestimmungseinheit zwischen einem Bandpassfilter und einer Zeitdifferenzbestimmungseinheit in einer parallelen Anordnung zueinander einen ersten und einen zweiten Flankendetektor umfasst, wobei die Schrittdauerbestimmungseinheit zudem eine Schwellwertbestimmungseinheit zur Bestimmung von Schaltschwellen des ersten bzw. des zweiten Flankendetektors aufweist, wobei die Schwellwertbestimmungseinheit eingangsseitig mit dem Bandpassfilter und ausgangsseitig mit dem ersten und dem zweiten Flankendetektor verbunden ist. Diese Ausführungsform erlaubt die Erfassung eines Schrittanfangs und eines zugehörigen Schrittendes anhand eines Beschleunigungsmaximums und eines nachfolgenden Beschleunigungsminimums (oder umgekehrt) und der Zeitdifferenz zwischen beiden, woraus sich die Schrittdauer $t_S$ ergibt und womit in einer nachgeschalteten Schrittdauer-Distanzeinheit die Ermittlung der ersten Schrittlänge $l_{SB}$ aus dem Kontrollwinkel $\measuredangle_G$, der Schrittdauer $t_S$ und Konstanten einer Konstanteneinheit erfolgt bzw. in einer nachgeschalteten Magnetfeld-Schrittlängeneinheit die Ermittlung der zweiten Schrittlänge $l_{SH}$ aus dem Kontrollwinkel $\measuredangle_G$, der Schrittdauer $t_S$ und der Magnetfelddistanz ($D_H$) erfolgt.

Die der Erfindung für das Verfahren zum Betrieb eines Lawinenverschüttetensuchgeräts zugrundeliegende Aufgabe wird gelöst durch die Merkmale des Anspruchs 9; die diesen Erfindungsgedanken weiterbildenden Merkmale sind Gegenstand der Unteransprüche 10 bis 15.

Der Kern der Erfindung für das Verfahren zum Betrieb eines Lawinenverschüttetensuchgeräts, welches mit einer Sende-/Empfangseinheit mit einer Sende-/Empfangsantenne zum Senden und Empfangen von Funksignalen ausgestattet ist, des Weiteren eine Magnetfelddistanzeinheit zur Bestimmung einer Magnetfelddistanz $D_H$ aus empfangenen Funksignalen aufweist und eine Magnetfeldwinkeleinheit zur Bestimmung eines Magnetfeldwinkels $\measuredangle_H$ aus der Feldvektorrichtung von empfangenen Funksignalen aufweist, wobei die Magnetfelddistanz $D_H$ und der Magnetfeldwinkel $\measuredangle_H$ an eine Such-Navigationseinheit übergeben werden, ist darin zu sehen, dass das Lawinenverschüttetensuchgerät ferner eine Inertialsensoreneinheit umfasst, in welcher in einem Gyroskop -im Folgenden auch Kontrollwinkeleinheit genannt- ein Kontrollwinkel $\measuredangle_G$ und in einem Beschleunigungssensor ein Beschleunigungswert $a_{Erde}$ ermittelt werden, wobei der Beschleunigungswert $a_{Erde}$ einer Schrittdauerbestimmungseinheit zwecks Bestimmung einer Schrittdauer $t_S$ zugeführt wird, die nachfolgend in einer Schrittlängenbestimmungseinheit der Ermittlung einer ersten Schrittlänge $l_{SB}$ - basierend im Wesentlichen auf einem Kontrollwinkel $\measuredangle_G$ aus der Inertialsensoreneinheit, der Schrittdauer $t_S$ und Konstanten aus einer Konstanteneinheit- und der Ermittlung einer zweiten Schrittlänge $l_{SH}$ -basierend im Wesentlichen auf dem Kontrollwinkel $\measuredangle_G$ aus der Inertialsensoreneinheit, der Schrittdauer $t_S$ und der Magnetfelddistanz $D_H$- dient und der Such-Navigationseinheit übergeben werden.

Von besonderem Vorteil ist dabei, dass nach der Bestimmung der Magnetfelddistanz $D_H$ und der Bestimmung des Magnetfeldwinkels $\bowtie_H$ beide Werte als Referenzwerte dienen können und basierend darauf die Navigation einer Suchperson mittels des Kontrollwinkels $\bowtie_G$, des Beschleunigungswerts $a_{Erde}$, der daraus ermittelten Schrittdauer $t_S$ und der ersten Schrittlänge $l_{SB}$ erfolgt kann, und zwar frei von einer weiteren Erfassung des Funksignals eines Magnetfelds. Das heisst, dass die Navigation neu unabhängig von einer weiteren Erfassung der Funksignale durchgeführt werden kann. Dabei ist unerheblich, ob ein Signalausfall des Magnetfelds eines Verschütteten vorliegt, eine Signalüberlagerung mehrerer Trägersignale eine Navigation basierend auf den Funksignalen erschwert oder bewusst -zumindest temporär- auf die Funksignale des Magnetfelds bei der weiteren Navigation verzichtet wird.

Eine vorteilhafte Ausführungsform der Erfindung sieht vor, dass die Schrittlängenbestimmungseinheit eine Schrittdauer-Distanzeinheit umfasst, die eingangsseitig die Schrittdauer $t_S$ aus einer Zeitdifferenzbestimmungseinheit der Schrittdauerbestimmungseinheit empfängt, wobei die Schrittdauer-Distanzeinheit zudem mit einer Konstanteneinheit verbunden ist und ferner den Kontrollwinkel $\bowtie_G$ aus dem Gyroskop empfängt, um die erste Schrittlänge $l_{SB}$ zu ermitteln und an die Such-Navigationseinheit auszugeben.

Mit Vorteil umfasst die Schrittlängenbestimmungseinheit des Weiteren eine Magnetfeld-Schrittlängeneinheit, die eingangsseitig die Schrittdauer $t_S$ empfängt, wobei die Magnetfeld-Schrittlängeneinheit ebenfalls die Magnetfelddistanz $D_H$ und den Kontrollwinkel $\bowtie_G$ empfängt, um eine zweite Schrittlänge $l_{SH}$ zu ermitteln und an die Such-Navigationseinheit auszugeben. Erfindungsgemäss weist die Schrittdauerbestimmungseinheit zwischen einem Bandpassfilter und einer Zeitdifferenzbestimmungseinheit zur Erfassung des Schrittanfangs und des zugehörigen Schrittendes in einer parallelen Anordnung zueinander einen ersten und einen zweiten Flankendetektor auf, mit denen ein Schrittanfang und ein Schrittende aus den Beschleunigungswerten ermittelt werden, wobei zudem eine Schwellwertbestimmungseinheit zur Bestimmung von Schaltschwellen des ersten bzw. des zweiten Flankendetektors eingangsseitig mit dem Bandpassfilter und ausgangsseitig mit dem ersten und dem zweiten Flankendetektor verbunden ist.

Gemäss der Erfindung werden der Magnetfeldwinkel $\bowtie_H$ und der Kontrollwinkel $\bowtie_G$ einer Schrittrichtungseinheit zugeführt, die daraus einen Korrekturwinkel $\bowtie_{rel}$ ermittelt und diesen an die Such-Navigationseinheit weiterleitet.

Ferner ist erfindungsgemäss vorteilhaft, dass der Kontrollwinkel $\bowtie_G$ einer Sturzerkennungseinheit zugeführt wird, die mit der Such-Navigationseinheit verbindbar ist; hiermit wird ein Sturz einer Suchperson von einem Schritt unterschieden und entsprechend bei der Wegführung berücksichtigt.

Selbstverständlich ist die Erfindung nicht auf die hier gezeigten Ausführungsformen beschränkt, sondern durch den Umfang der folgenden Ansprüche. Es ist auch denkbar, dass die Inertialsensoreneinheit des Weiteren einen Kompass 8 umfasst, der hinsichtlich der Richtungsbestimmung dienlich sein kann. Es ist selbstredend ebenfalls der zusätzliche Einsatz einer GPS-Einheit denkbar und/oder eine Funkdateneinheit (beide nicht explizit gezeigt in den Figuren), die die Ortsposition eines Verschütteten unmittelbar an das Lawinenverschüttetensuchgerät übermitteln.

## Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die

Fig. 1 ein Blockschaltbild eines erfindungsgemässen Lawinenverschüttetensuchgeräts,

Fig. 2 ein Koordinatensystem des erfindungsgemässen Lawinenverschüttetensuchgeräts nach Fig. 1,

Fig. 3 Magnetfeldlinien eines 457 kHz Funksignals des Lawinenverschüttetensuchgeräts eines Verschütteten und Ortspunkte, an denen dieses Funksignal empfangen werden kann,

Fig. 4 eine weitere Darstellung der Magnetfeldlinien des 457 kHz Funksignals des Lawinenverschüttetensuchgeräts eines Verschütteten,

Fig. 5 einen Suchvorgang während eines Funksignalausfalls des Magnetfelds,

Fig. 6    eine graphische Darstellung von Beschleunigungswerten, die der Ermittlung einer Schrittdauer verdeutlicht und

Fig. 7    einen weiteren Suchvorgang mit einem Korrekturmanöver.

**Wege zur Ausführung der Erfindung**

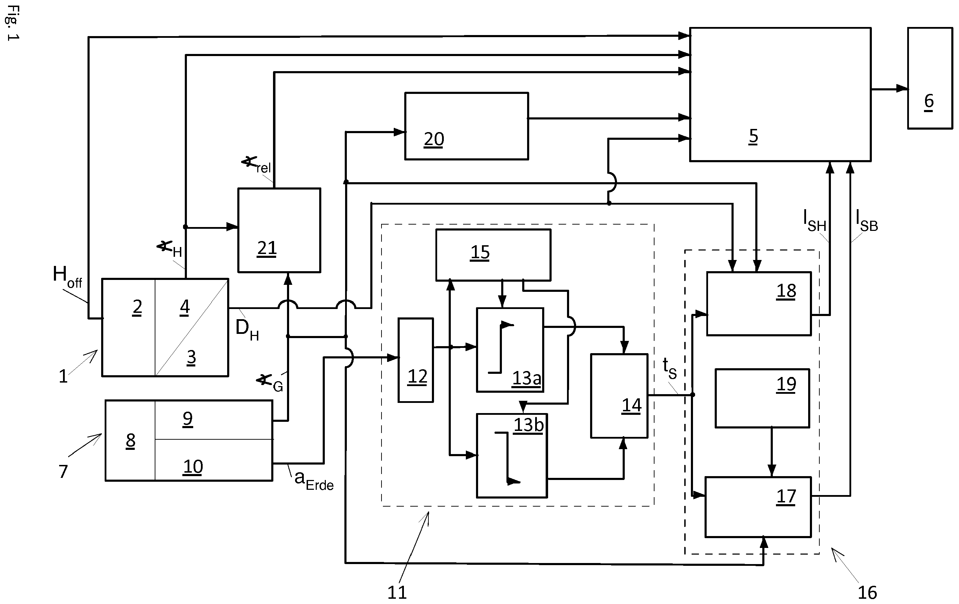

In Fig. 1 zeigt in einem Blockschaltbild ein Lawinenverschüttetensuchgerät gemäss der Erfindung, welches in einer Sende-/Empfangseinheit 1 eine Sende-/Empfangsantenne 2, eine Magnetfelddistanzeinheit 3 zur Bestimmung einer Magnetfelddistanz ($D_H$) aus empfangenen Funksignalen und eine Magnetfeldwinkeleinheit 4 zur Bestimmung eines Magnetfeldwinkels $\sphericalangle_H$ aus der Feldvektorrichtung von empfangenen Funksignalen umfasst. Die Sende-/Empfangseinheit 1 weist drei unmittelbare Verbindungen mit einer Such-Navigationseinheit 5 und einer nachgeschalteten Anzeige 6 auf; eine erste dieser Verbindungen dient der Weiterleitung eines Signals $H_{off}$, das in den Fällen ausgesendet wird, wenn ein Magnetfeld vom Lawinenverschüttetensuchgerät nicht empfangbar oder nicht mit ausreichender Qualität empfangbar ist; eine zweite Verbindung leitet ein Signal des Magnetfeldwinkels $\sphericalangle_H$ an die Such-Navigationseinheit 5 weiter und eine dritte Verbindung ein Signal der Magnetfelddistanz $D_H$.

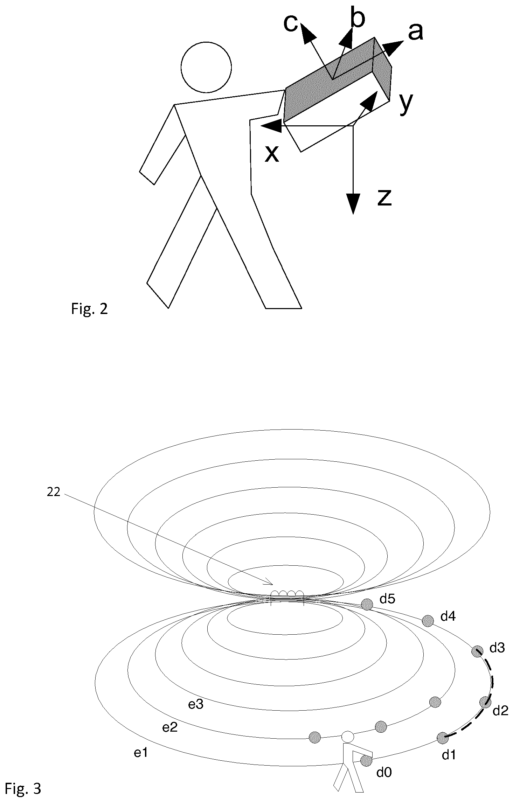

Des Weiteren umfasst das Lawinenverschüttetensuchgerät eine Inertialsensoreneinheit 7 mit einem Kompass 8, einem Gyroskop 9 (im Folgenden auch Kontrollwinkeleinheit genannt) und einem Beschleunigungssensor 10. Mit der Kontrollwinkeleinheit 9 und dem Beschleunigungssensor 10 werden bei der Messung bekanntermassen jeweils alle drei Richtungen a, b, c der Raumkoordinaten relativ zur Gerätelage erfasst und auf ein lageunabhängiges Bezugssystem x, y, z umgerechnet, dessen z-Komponente orthogonal zur Erde steht und deren x-, y-Richtung dem Anfangswert des Gyroskops entsprechen (siehe auch Fig. 2), wobei die Kontrollwinkeleinheit 9 den Kontrollwinkel $\sphericalangle_G$ ausgibt und der Beschleunigungssensor den Beschleunigungswert $a_{Erde}$. Der Kontrollwinkel $\sphericalangle_G$ und der Magnetfeldwinkel $\sphericalangle_H$ werden einer Schrittrichtungseinheit 21 eingangsseitig zugeführt, die in Abhängigkeit dieser Eingangswerte einen Korrekturwinkel $\sphericalangle_{rel}$ an die Such-Navigationseinheit 5 übermittelt. Der Kontrollwinkel $\sphericalangle_G$ dient ferner als Eingangssignal einer Sturzerkennungseinheit 20, mit welcher zwischen einem normalen Schritt einer Suchperson und einem Sturz derselben unterschieden wird und ein entsprechendes Signal an die Such-Navigationseinheit 5 weitergegeben wird.

Der Beschleunigungswert $a_{Erde}$ dient erfindungsgemäss als Eingangssignal einer Schrittdauerbestimmungseinheit 11 zur Bestimmung einer Schrittdauer $t_S$. In dieser Schrittdauerbestimmungseinheit 11 wird der Beschleunigungswert $a_{Erde}$ über ein Bandpassfilter 12 parallel einem ersten Flankendetektor 13a für ansteigende Flanken und einem zweiten Flankendetektor 13b für abfallenden Flanken zugeführt; ferner wird der Beschleunigungswert $a_{Erde}$ einer Schwellwertbestimmungseinheit 15 zur Bestimmung von Schaltschwellen des ersten bzw. des zweiten Flankendetektors 13a, b eingangsseitig zugeführt, wobei die Schwellwertbestimmungseinheit ausgangsseitig jeweils mit dem ersten bzw. zweiten Flankendetektor 13a, b verbunden ist und deren Schaltschwellen berechnet. Eine Zeitdifferenzbestimmungseinheit 14 zur Erfassung eines Schrittanfangs und eines zugehörigen Schrittendes empfängt die Ausgangssignale der Flankendetektoren 13a, 13b, um aus der Zeitdifferenz zwischen einer ansteigenden Flanke und einer abfallenden Flanke die Schrittdauer $t_S$ zu ermitteln. Mittels einer nachgeschalteten Schrittlängenbestimmungseinheit 16 werden mit der Schrittdauer $t_S$ die erste Schrittlänge $l_{SB}$ und die zweite Schrittlänge $l_{SH}$ ermittelt und diese Schrittlängen $l_{SH}$ bzw. $l_{SB}$ werden der Such-Navigationseinheit 5 zugeführt.

In der Schrittlängenbestimmungseinheit 16 dient eine Magnetfeld-Schrittlängeneinheit 18 -mit den Eingängen Schrittdauer $t_S$, Kontrollwinkel $\sphericalangle_G$ und Magnetfelddistanz $D_H$- der Bestimmung der zweiten Schrittlänge $l_{SH}$, die der Such-Navigation 5 zuführbar ist. Ferner umfasst die Schrittlängenbestimmungseinheit 16 eine Schrittdauer-Distanzeinheit 17, die aus den Eingangssignalen Kontrollwinkel $\sphericalangle_G$ und Schrittdauer $t_S$ und einer Anzahl Konstanten aus einer Konstanteneinheit 19 die erste Schrittlänge $l_{SB}$ ermittelt und diese an die Such-Navigationseinheit 5 weiterleitet.

Das erfindungsgemässe Lawinenverschüttetensuchgerät (kurz auch LSV genannt) empfängt ein gepulstes Magnetfeld über die Sende-/Empfangsantenne -die als Spulenantenne ausgebildet ist- bei einer vorzugsweise tiefen Frequenz von 457 kHz (LVS Standard). Das Magnetfeld gleicht jenem eines Solenoids; es besteht aus Magnetfeldlinien e1, e2, e3...en, in Form von Ellipsen, welche sich alle in einer Achse einer Sendespule 22 berühren, siehe Fig. 3. Der standardisierte Suchvorgang erfolgt längs einer hier aufgezeigten Magnetfeldlinie, beispielsweise e1 in Fig. 3. An den Positionen d0, dl...dn einer Suchperson steht jeweils ein neues Wertepaar für den Magnetfeldwinkel $\measuredangle_H$ und die Magnetfelddistanz $D_H$ zur Sendespule 22 eines Verschütteten zur Verfügung.

Wie bereits oben erläutert, umfasst das erfindungsgemässe Lawinenverschüttetensuchgerät neben der Sende-/Empfangseinheit 1 mit bis zu drei Antennen zur Bestimmung der Magnetfelddistanz $D_H$ aus der Magnetfeldstärke

und dem Magnetfeldwinkel $\measuredangle_H$ des 457 kHz Signals auch eine Inertialsensoreneinheit 7 (auch kurz IMU genannt) bestehend aus einem dreiachsigem Gyroskop bzw. einer Kontrollwinkeleinheit 9 und dem Beschleunigungssensor 10 für drei Achsen. Die Lage des Lawinenverschüttetensuchgeräts lässt sich relativ zur Vertikalen gegen Erde in bekannter Art und Weise kalibrieren. Dabei ermittelt der Beschleunigungssensor 10 die notwendigen Korrekturen, um das auf das Lawinenverschüttetensuchgerät bezogene Koordinatensystem mit den Achsen a, b, c umzurechnen in ein geozentrisches Koordinatensystem mit x, y, z, wie in Fig. 2 dargestellt. Das Lawinenverschüttetensuchgerät kann dadurch in jeder beliebigen Lage gehalten werden. Die Verwendung des Quaternionen-Zahlenbereichs nach dem Stand der Technik sorgt dafür, dass dabei keine singulären Fälle auftreten können.

Nach erfolgreicher, dem Fachmann bekannter Kalibration der IMU kann eine Navigation relativ zur übermittelten Position im Magnetfeld durchgeführt werden, da der Kontrollwinkel $\measuredangle_G$ aus den Drehraten in allen Koordinatenachsen und die Beschleunigung $a_{Erde}$ aus den Beschleunigungen in allen Koordinatenachsen laufend erfasst werden, typischerweise mit einer 100 Hz Rate. Die einfache Integration der Drehraten ergibt den aktuellen Kontrollwinkel bezogen auf eine willkürliche Referenzposition des Gyroskops. Die Position des Lawinenverschüttetensuchgeräts im Suchfeld ist gegeben durch die Vektorrichtung des Magnetfeldwinkels $\measuredangle_H$ des 457 kHz Magnetfeldes und der Magnetfelddistanz $D_H$, welche auf Grund der einfallenden Magnetfeldstärke ermittelt werden kann. Aufgrund der standardisierten Signalabläufe ist im Intervall von 1 Sekunde ein kurz andauerndes Messsignal zu erwarten, aus welchem sich die Richtungs- und die Distanzangabe ermitteln lassen. Die neue Richtung und Distanz werden in der Anzeige des Lawinenverschüttetensuchgeräts angezeigt. Erfindungsgemäss wird bei dem Lawinenverschüttetensuchgerät, welches mit der Kontrollwinkeleinheit 9 ausgestattet ist, fortlaufend jede Drehwinkeländerung berücksichtigt, womit sich die letzte Richtung aus einer 457 kHz Messung immer korrekt darstellen lässt, selbst wenn zwischen zwei aufeinander folgenden Empfangssignalen des Magnetfelds eine Drehung erfolgt oder die Suchperson zwischenzeitlich stürzt oder abdriftet. Dabei entstehende Abweichungen quer zur Route führen die Suchperson lediglich auf eine andere Magnetfeldlinie (Ellipse), beispielsweise von e1 auf e2 in Fig. 3. Bereits ab dem nächsten Messwertepaar des Magnetfelds ist der Fehler ohne Folgen, da auch e2 zur Sendespule 22 eines Verschütteten führt. Die vorgeschlagene Erfindung erlaubt es somit, die Intervalle des Magnetfeldmesssignals auf deutlich über 1 s zu erhöhen ohne die Suchperson durch sprunghaft wechselnde Anzeigerichtungen in Stress zu versetzen.

Kritischer ist es, wenn sich die Magnetfeldsignale von mehreren Sendespulen 22 mehrerer Verschütteter überlagern. Je nach Stabilität der Zeitbasen der Magnetfeldsignale aus mehreren Sendespulen 22 tritt es immer wieder auf, dass typischerweise 5 - 10 s lang keine brauchbaren Messwerte am Lawinenverschüttetensuchgerät zur Verfügung stehen bzw. an den Positionen d1, d2, d3 in Fig. 3 keine Messwerte empfangbar sind. Die Suchperson muss dann warten, bis sich die blockierende Situation von selbst wieder auflöst, also bei d1 ein 457 kHz Messsignal wieder korrekt empfangen wird. Mit dem hier vorliegenden, erfindungsgemässen Lawinenverschüttetensuchgerät ist es nun möglich, dass die Suchperson mit Hilfe der IMU selbst bei temporärem Ausfall des Magnetfeldsignals weiter in die richtige Richtung geführt wird und zwar mittels der Schrittdauerbestimmung in der Schrittdauerbestimmungseinheit 11; hierfür werden die Beschleunigungswerte $a_{Erde}$ zunächst durch das Bandpassfilter 12 von Gleichsignalanteilen als Folge der Erdgravitation befreit und geglättet, mit dem Ziel, Störungen durch die Beschaffenheit des Untergrundes (Eis, Schnee, Fels) und des Schuhwerks sowie den Bewegungen der Hand einer Suchperson zu eliminieren.

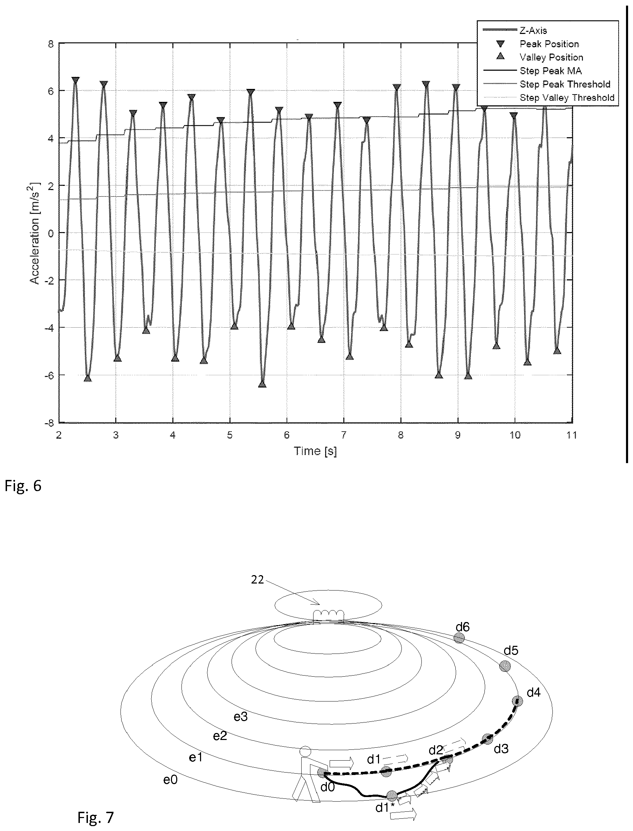

Zwischen zwei aufeinander folgenden Schritten wird die Zeitdauer gemessen. Wie in Fig. 6 gezeigt wird, ergibt sich aus der Filterung der Amplitude des geozentrierten Beschleunigungsvektors (z-Richtung) eine schwingungsähnliche Zeitfunktion "Z-Axis", in der die einzelnen Schritte quasi als Periode erkennbar sind. Als Bandpassfilter dient ein dem Fachmann bekanntes, digitales FIR Filter, welches jedoch optimiert wurde um mit geringem Rechenaufwand auszukommen. Es eignet sich z.B. ein solches FIR Bandpassfilter 12 mit einer Stossantwort bestehend aus einer n-fachen 1 Wertefolge gefolgt von n-fachen -1 Wertefolge. Die obere Grenzfrequenz des Bandpassfilters 12 liegt im Bereich von wenigen Hz. Positive und negative Maxima, Peak ▼ und Valley ▲, lassen sich am Ausgang des Bandpassfilters gut identifizieren, siehe Beispiel in Fig. 6.

Die Zeitfunktion "Z-Axis" hat je nach Unterlage, Schuhwerk und Trageart des Lawinenverschüttetensuchgeräts eine sich stark ändernde Amplitude. Deshalb muss für die Entscheidung einer Schrittdauer $t_S$ entsprechend einer einzelnen Periode der Zeitfunktion eine sich selbst anpassende Schwelle bestimmt werden, bei der die beiden Flankendetektoren 13a, b schalten sollen.

Die Schwellwertbestimmungseinheit 15 zur Bestimmung von Schaltschwellen des ersten bzw. des zweiten Flankendetektors 13a, b bestimmt dazu einen gleitenden Mittelwert der Spitzen "Step Peak MA" in Fig. 6 aus den positiven und negativen Maxima der Zeitfunktion "Z-Axis". Aus dem gleitenden Mittelwert wird dann mit Hilfe eines empirisch ermittelten Faktors die Schwelle "Step Peak Threshold" festgelegt, über der ein positiver Spitzenwert liegen muss, um als solcher als Schrittanfang in die Schrittzählung einfliessen zu dürfen (Dreieck Marker ▼). Um das Schrittende zu detektieren wird eine zweite tiefere Schwelle "Step Valley Threshold", vorteilhaft auf 50% der ersten Schwelle gelegt. Wird diese Schwelle unterschritten, so wird das nächste Minimum als das zu verwendende Schrittende detektiert (Dreieck Marker ▲). Die Differenz der Zeit zwischen zwei aufeinanderfolgenden Markern ▼▼ entspricht der Schrittdauer $t_S$, die in der Zeitdifferenzeinheit 14 ermittelt wird. Die Schrittdauer $t_S$ wird erfindungsgemäss einzeln pro Schritt ermittelt, da die Fortbewegung im Gelände in der Praxis sehr unregelmässig ist; denkbar ist aber auch eine Mittelung über eine bestimmte Anzahl Schritte, sofern die erhaltenen Messwerte dies plausibel zulassen.

Aus der Schrittdauer $t_S$ wird sodann in der Schrittlängenbestimmungseinheit 16 die erste Schrittlänge $l_{SB}$ als pro Schritt zurückgelegte Wegstrecke bestimmt:

$$l_{SB} = a + b \cdot 1/t_S$$

wobei a und b hier Konstanten sind, die aus empirischen Daten ermittelt werden und in der Konstanteneinheit 19 für die Ermittlung der ersten Schrittlänge $l_{SB}$ bereitstehen.

Eine Schrittdauer $t_S$ und erste Schrittlänge $l_{SB}$ werden nur dann bestimmt und als zurückgelegte Wegstrecke verwendet, falls Schrittanfang und Schrittende detektiert wurden.

Da sich die Suchperson im unwegsamen Gelände im Wesentlichen nicht geradlinig bewegt, wird erfindungsgemäss die erste Schrittlänge $l_{SB}$ entsprechend der im Schritt enthaltenen Drehung mittels des Kontrollwinkels $\measuredangle_G$ wie folgt verkürzt:

$$l_{SB} = (1 - e \cdot \measuredangle_G) \cdot (a + b \cdot 1/t_S)$$

oder

$$l_{SB} = (1 - \cos \measuredangle_G) \cdot (a + b \cdot 1/t_S),$$

wobei die Konstante e beispielsweise so gewählt wird, dass bei einer 90 Grad Drehung die Schrittlänge null wird. Dabei ist die Konstante e ebenfalls in der Konstanteneinheit 19 verfügbar. Die so ermittelte erste Schrittlänge $l_{SB}$ findet vorzugsweise in Fällen Anwendung, wenn die Navigation ohne Verwendung des 457 kHz Magnetfelds ausgeführt werden soll.

In der Praxis erweisen sich die Distanzangaben aus dem 457 kHz Magnetfeld in grosser Distanz als ungenau und abhängig von der Lage einer Sendeantenne 22 des Verschütteten. Dies kann die tatsächliche Schrittlänge aus der IMU relativeren, wenn man die jeweiligen Distanzangaben aus den 457 kHz Daten als Referenz betrachtet.

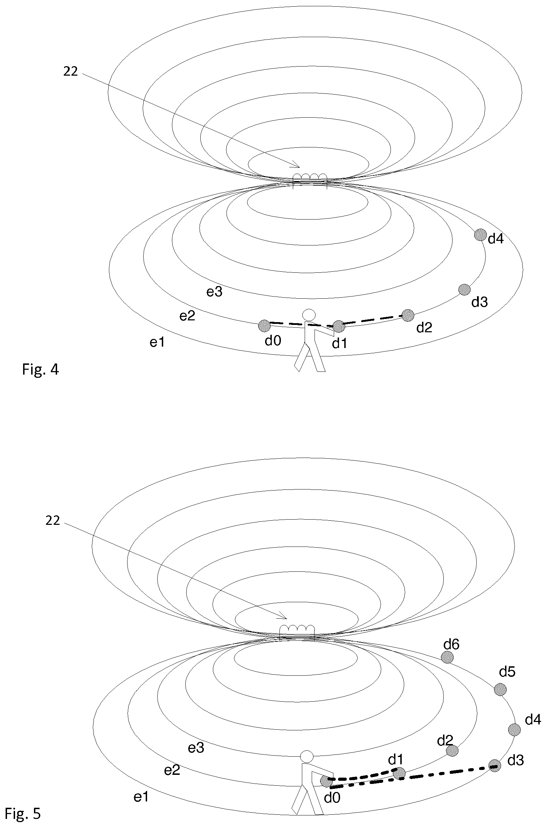

Eine Anpassung der ersten Schrittlänge $l_{SB}$ lässt sich erfindungsgemäss durch Kombination der Schrittdauer $t_S$ und den unmittelbar vor dem Signalausfall erhaltenen Messwerten aus dem 457 kHz Magnetfeldsignal erreichen. Wie in Fig. 4 dargestellt, wird aus den exakt 1 Sekunde auseinanderliegenden Messsignalen bei d0, d1 und d2, welche Richtung und Distanz beinhalten, die zurückgelegte Distanz d1-d0 bzw. d2-d1 in der jeweiligen Sekunde (Messzeit) bestimmt. Aus der Schrittlängenbestimmungseinheit 16 ist die in einer Sekunde zurückgelegte Schrittanzahl bekannt. Beide Grössen zusammen erschliessen die zu verrechnende Schrittlänge. Da die Messzeit von 1 Sekunde im Vergleich zur Schrittkadenz gering ist und das 457 kHz Signal ebenfalls mit einem zufälligen Messfehler behaftet sein kann, werden vorteilhaft mehrere Intervalle zur Berechnung der aus dem 457 kHz Magnetfeld resultierenden Geschwindigkeit herangezogen und gemittelt, z.B. d1-d0...d4-d3 in Fig. 4.

Dass dabei stückweise lineare Abschnitte zwischen d0 und d1, d1 und d2 etc. zur Approximation der eigentlich gekrümmten Kurve benutzt werden, stellt bei den vorherrschenden Geometrieverhältnissen einen vernachlässigbaren Fehler dar. Tritt ein von der IMU detektierter Schritt auf, wird diesem eine zweite Schrittlänge $l_{SH}$ zugewiesen:

$$l_{SH} = (\text{Magnetfelddistanz-Differenz} / \text{Messzeit}) \cdot t_S$$

Die aus den 457 kHz Messwerten erhaltene Magnetfelddistanz $D_H$ hängt vom eingeschlagenen Weg, d.h. von der Abweichung von der Sekante an eine Ellipse ab. Deshalb kann, wie bei der tatsächlichen Schrittlängenbestimmung, wiederum eine Korrektur auf Grund des Kontrollwinkels $\sphericalangle_G$ für jedes Intervall ausgeführt werden. Wird kein Schritt von der IMU detektiert, bleibt die Magnetfelddistanz $D_H$ auf dem letzten verfügbaren Wert stehen.

Die Werte e, a und b werden empirisch in Feldtests aber allgemeingültig ermittelt. Es ist auch denkbar, dass durch ein kurzes Training die Werte spezifisch für eine Suchperson bestimmt werden und als Profil in der Konstanteneinheit 15 bereitgestellt werden können. Welche Schrittlänge, die erste Schrittlänge $l_{SB}$ oder die zweite Schrittlänge $l_{SH}$, verwendet werden soll, ist abhängig von dem gewünschten Verhalten der Such-Navigationseinheit 5 und der daraus resultierenden Darstellung auf die Anzeige 6, welche der Suchperson erfindungsgemäß eine möglichst sprungfreie und damit gleichermassen stressfreie Navigation bereitstellt. Im Sinne der Erfindung ist es auch denkbar, eine Kombination der beiden Schrittlängen $l_{SB}$ und $l_{SH}$ zu verwenden. Ist die Schrittweite aus den 457 kHz Daten sprunghaft oder sehr gross oder sehr klein, so kann zum Beispiel solange auf die erste Schrittlänge $l_{SB}$ der IMU abgestellt werden, bis stabilere Magnetfelddaten vorliegen.

Ebenso können sich Stürze leicht ereignen. Stürze im Schnee unterscheiden sich stark von Stürzen im Haus oder auf einer Strasse, deshalb eignet sich die Extraktion aus der Beschleunigung -wie sie in handelsüblichen Sturzsensoren Verwendung findet- nicht. Erfindungsgemäss wird ein Sturz aus einer zum Normalgebrauch stark verdrehten Lage des Lawinenverschüttetensuchgeräts in der Sturzerkennungseinheit 20 mittels es eines Kontrollwinkels $\sphericalangle_G$ ermittelt, z.B. bei einer Abweichung von mehr als 60 Grad gegenüber der üblichen Halte- bzw. Tragepositionen. Alternativ wird die Geschwindigkeit der Winkeländerungen des Kontrollwinkels $\sphericalangle_G$ überwacht, womit dann ein Sturz angezeigt wird, wenn die Geschwindigkeit der Winkeländerungen über einer definierten Schwelle liegen. Da der Sturz meist mit einem oder mehreren Schritten verbunden ist, werden diese dann nicht als solche erfasst, bzw. die Schritte werden für eine bestimmte Totzeit unterdrückt, z.B. 1 Sekunde.

Des Weiteren kann eine Suchperson ein Stück des Suchweges rennend zurücklegen und dabei das Gerät einfach beliebig in der Hand halten oder am Tragriemen baumeln lassen. In diesem Fall sind weder Richtung noch Schrittdetektion in der IMU aussagekräftig. Da die Richtung mit jener des 457 kHz Signals dann nicht vernünftig übereinstimmt, wird die IMU solange nicht beachtet, bis wieder eine minimale Übereinstimmung gegeben ist und das neue 457 kHz Messwertepaar als neue Referenz für die IMU benutzt werden kann.

Durch die erfindungsgemässe Verwendung der Schrittdauerbestimmungseinheit 11 zur Bestimmung der Schrittdauer $t_S$ und der Schrittlängenbestimmungseinheit 16 zur Ermittlung der ersten Schrittlänge $l_{SB}$ und der zweiten Schrittlänge $l_{SH}$ in Kombination mit der Erfassung des Kontrollwinkels $\sphericalangle_G$ verfügt das neue Lawinenverschüttetensuchgerät über die Technik, den zurückgelegten Weg abzubilden durch Aneinanderreihen der Schrittlängen und der Richtungswinkel in der Such-Navigationseinheit 5. Dieser Streckenplan ist mit der Technologie der heutiger Inertialsensoreneinheit 7 bis zu mehreren 10 Sekunden metergenau. Es lässt sich also ohne Zusatzmittel -wie GPS oder Funk- eine grössere Strecke ausgehend von einem Referenzpunkt aus den Magnetfelddaten abgehen und den Endpunkt daraus recht genau abzubilden. Mit der Verwendung der ersten Schrittlänge $l_{SB}$ kann so der real zurückgelegte Weg ermittelt werden und jederzeit bei einer Abweichung von einer vorgegebenen Route korrigiert werden. Das Lawinenverschüttetensuchgerät besitzt damit neu ein Mittel zur Manöverkontrolle. Dies ist beispielhaft in Fig. 7 dargestellt. Die Suchperson weicht bei Position d0 von der vorgegebenen Route ab (Hindernis, Unsicherheit) und erhält bei d1* einen neuen 457 kHz Magnetfeldvektor. Anstatt nun der neuen Richtung zu folgen kann die Suchperson auf Grund des erfassten, seit d0 gegangenen Weges zurück auf den kürzeren Pfad entlang e1 geführt werden.

Die Such-Navigationseinheit 5 erhält alle notwendigen Messwerte an ihren Eingängen zugeführt und speichert diese ab. Damit ist sowohl Vergangenheit wie aktuellster Wert für Berechnungen verfügbar. Die Mittelung der letzten Messwerte und Prädiktion aus vergangenen Werten sind Beispiele, die zu einer verbesserten Wegführung führen. Dem Fachmann erschliessen sich verschiedene mögliche Alternativen zur Korrektur, welche in der Such-Navigationseinheit 5 ausgeführt werden können. So kann das momentane Wegstück auf der Ellipse durch eine gerade angenähert werden oder es wird in grösseren Intervallen korrigiert als die nach heutigem Standard verwendete eine Sekunde zwischen d1 und d2. Eine grosse Genauigkeit ist dabei weniger das Hauptmerkmal, da die Zielführung mit dem 457 kHz Signal selbstheilend ist. Wichtig ist es, der Suchperson stets eine plausible Route anzuzeigen, welche Sicherheit gibt, alles richtig zu machen.

Bei einem 457 kHz Signalausfall über besagten bis zu 10 s, d.h. in Fig. 5 fehlen nach d0 beispielsweise die Signalpulse bei d1 und d2, sind nun mit der IMU mindestens 2 Möglichkeiten zur konkreten Wegfortführung angezeigt.

Im ersten einfachen Fall wird die letzte aus dem 457 kHz Signal gewonnene Richtung beibehalten. Dies entspricht dem Weg einer Tangente an die Ellipse, e2 in Fig. 5 und führt auf Ellipse e1. Es kann auch weiter hilfreich sein, mehrere vergangene Werte zuerst zu mitteln, um die Streuung der Messwerte zu verringern.

In einer verbesserte Variante kann die Krümmung der Ellipse aus vergangenen Werten geschätzt werden, als auszuführende Winkeländerung pro Zeitintervall, beispielsweise pro Sekunde. Während des Ausfalls wird die Winkeländerung sodann durch die IMU mitberücksichtig und entsprechend bei der Anzeige der Marschrichtung mit eingerechnet. Die Suchperson würde in Fig. 5 dann auf der Feldlinie e2 verbleiben.

Bei der Suche nach Lawinenverschütteten ist zwischen drei Abschnitten zu unterscheiden und dazu gemäss Praxis jeweils unterschiedliche Manöver empfohlen:

1. Weit vom Verschütteten entfernt, kein 457 kHz Signal empfangbar: Z-Suche in einem definiert breiten Suchstreifen mit Wegstück parallel zur Abgangsrichtung der Lawine und Wegstück senkrecht dazu mit definiertem Schleifenabstand.

2. 457 kHz Signal empfangbar aber nur grob als Betrag oder eine Vektorkomponente bzw. Richtungsinformation ist nicht oder nur schlecht auswertbar: Z-Suche fortsetzen und geringer werdenden Abstand auf Grund 457 kHz Signalstärke in Wegrichtung einbeziehen.

3. 457 kHz Signal in Betrag und Richtung gut empfangbar: Suche entlang einer Magnetfeldlinie.

Durch den erfindungsgemässen Einbezug der Schrittdauer bzw. der Schrittlänge sind folgende Verbesserungen bei der Suche realisierbar:

Im ersten Bereich steht dem Lawinenverschüttetensuchgerät keine Ortsposition zur Verfügung. Die Suchperson erkennt aber die Richtung der abgegangenen Lawine. Theoretisch weiss sie auch was zu tun ist, kann jedoch unter Stress u.U. Distanzen und Richtung nicht korrekt einschätzen. Im oben erwähnten Abschnitt 1 kann das erfindungsgemässe Lawinenverschüttetensuchgerät die Suchperson über die Anzeige 6 anweisen, parallel zum Lawinenhang loszulaufen. Dabei sollte eine Mindestbreite parallel gelaufen werden bevor man eine bestimmte Strecke im Lawinenhang nach unten oder oben geht und dann wieder parallel läuft. Das neue Lawinenverschüttetensuchgerät informiert die Suchperson über die Anzeige 6, ob sie dieser Strategie genügend folgt, bzw. wann gewendet werden soll.

Im zweiten Abschnitt wird zwar ein 457 kHz Signal empfangen, es liegt aber in der ersten Phase oft noch keine Winkelinformation vor, da nur eine Sende-/Empfangsantennen 2 im Lawinenverschüttetensuchgerät eine grösste Länge und die damit einhergehende hohe Empfindlichkeit aufweist. Die Magnetfelddistanz $D_H$ kann dabei stark schwanken, da das Signal erstens noch verrauscht ist und zweitens je nach Lage der Sendeantenne des Verschütteten nur eine Vektorkomponente empfangen wird. Trotzdem lässt sich nun mit Hilfe der Distanzangaben aus dem Betrag des 457 kHz Signals ableiten, ob man sich dem Ziel annähert, entsprechend kann die Z-Suche nun verlasst werden. Die Kombination der Laufdistanz aus der Schrittlängenbestimmungseinheit 16 und dem 457 kHz Signal nach obigen Formeln, liefert der Suchperson eine von Sprüngen geglättete Information über die Magnetfelddistanz $D_H$ und die einzuschlagende Richtung. Dies schafft Vertrauen in den Suchablauf.

Wird ein vorgeschriebener Weg mit rechtwinklig zueinanderstehenden Abschnitten gegangen, so kann aus je einer Messung in jedem Abschnitt auch ein Suchwinkel berechnet werden. Ein solcher Weg lässt sich mit einer Manövervorgabe auf der Anzeige mit den Intervallen synchronisieren.

Ab einem gewissen Punkt im dritten Abschnitt genügt das 457 kHz Signal beispielsweise für zwei orthogonal zueinander angeordnete, horizontale Antennen und man erhält nun Abstand und Winkelinformation zur Magnetfeldlinie, so dass man dieser folgen kann. Erfindungsgemäss können in dieser Phase Abweichungen von der Solllinie mittels der oben beschriebenen Korrektur erfolgen, als auch die Weiterführung bei Signalausfall. Während des Magnetfeld-Signalausfalls übernimmt die Schrittlängenbestimmungseinheit 16 die Führung der Suchperson. Dabei kann diese Führung von den Magnetfeldlinien abweichen, wie das in Fig. 5 dargestellt ist, wo die Suchperson von e2 auf e1 gelangt. Dies ist nicht tragisch, da das Verfahren tolerant auf solche Fehler ist, weil die Feldlinie der Umgebung fast parallel verlaufen und ebenfalls in jedem Fall zum Verschütteten führen. Winkelfehler durch die Suchperson können aber auch durch leichte Korrektur der Richtung kompensiert werden, sodass die Suchperson wieder etwa auf e2 gelangt. Dies ist besonders nützlich, wenn Hindernisse im Gelände zu umgehen sind.

**Bezugszeichen**

1     Sende-/Empfangseinheit
2     Sende-/Empfangsantenne
3     Magnetfelddistanzeinheit zur Bestimmung einer Magnetfelddistanz $D_H$ aus empfangenen Funksignalen

4 Magnetfeldwinkeleinheit zur Bestimmung eines Magnetfeldwinkels $\sphericalangle_H$ aus der Feldvektorrichtung von empfangenen Funksignalen

5 Such-Navigationseinheit

6 Anzeige

7 Inertialsensoreneinheit

8 Kompass

9 Gyroskop/Kontrollwinkeleinheit zur Ermittlung eines Kontrollwinkels $(\sphericalangle_G)$

10 Beschleunigungssensor

11 Schrittdauerbestimmungseinheit zur Bestimmung einer Schrittdauer $t_S$

12 Bandpassfilter

13a, b Flankendetektor

14 Zeitdifferenzbestimmungseinheit zur Erfassung eines Schrittanfangs und eines zugehörigen Schrittendes

15 Schwellwertbestimmungseinheit zur Bestimmung von Schaltschwellen eines ersten bzw. eines zweiten Flankendetektors 13a, b

16 Schrittlängenbestimmungseinheit zur Ermittlung einer ersten Schrittlänge $l_{SB}$ und einer zweiten Schrittlänge $l_{SH}$

17 Schrittdauer-Distanzeinheit zur Ermittlung einer ersten Schrittlänge $l_{SB}$ aus einer Schrittdauer $t_S$, einem Kontrollwinkel $\sphericalangle_G$ und Konstanten einer Konstanteneinheit 19

18 Magnetfeld-Schrittlängeneinheit zur Ermittlung einer zweiten Schrittlänge $l_{SH}$ aus einer Schrittdauer $t_S$, einer Magnetfelddistanz ($D_H$) und einem Kontrollwinkel $\sphericalangle_G$

19 Konstanteneinheit

20 Sturzerkennungseinheit zur Unterscheidung zwischen einem normalen Schritt und einem Sturz einer Suchperson

21 Schrittrichtungseinheit zur Bestimmung eines Korrekturwinkels $\sphericalangle_{rel}$

22 Sendespule

## Patentansprüche

1. Lawinenverschüttetensuchgerät, umfassend eine Sende-/Empfangseinheit (1), mindestens eine Sende-/Empfangsantenne (2), eine Magnetfelddistanzeinheit (3) zur Bestimmung einer Magnetfelddistanz ($D_H$) aus empfangenen Funksignalen und eine Magnetfeldwinkeleinheit (4) zur Bestimmung eines Magnetfeldwinkels $(\sphericalangle_H)$ aus der Feldvektorrichtung von empfangenen Funksignalen, wobei die Magnetfelddistanzeinheit (3) und die Magnetfeldwinkeleinheit (4) ausgangsseitig mit einer Such-Navigationseinheit (5) und mit einer nachgeschalteten Anzeige (6) verbindbar sind, **dadurch gekennzeichnet,** **dass** das Lawinenverschüttetensuchgerät ferner eine Inertialsensoreneinheit (7) umfasst, welche ausgangsseitig über eine Schrittdauerbestimmungseinheit (11) zur Bestimmung einer Schrittdauer ($t_S$) und über eine Schrittlängenbestimmungseinheit (16) zur Ermittlung einer ersten Schrittlänge ($l_{SB}$) -basierend im Wesentlichen auf einem Kontrollwinkel $(\sphericalangle_G)$ aus der Inertialsensoreneinheit (7), der Schrittdauer ($t_S$) und Konstanten aus einer Konstanteneinheit (19)- und zur Ermittlung einer zweiten Schrittlänge ($l_{SH}$) - basierend im Wesentlichen auf dem Kontrollwinkel $(\sphericalangle_G)$ aus der Inertialsensoreneinheit (7), der Schrittdauer ($t_S$) und der Magnetfelddistanz ($D_H$)-mit der Such-Navigationseinheit (5) verbindbar ist.

2. Lawinenverschüttetensuchgerät nach Anspruch 1, **dadurch gekennzeichnet, dass** die Magnetfeldwinkeleinheit (4) zur Bestimmung des Magnetfeldwinkels $(\sphericalangle_H)$ aus der Feldvektorrichtung von empfangenen Funksignalen und die Inertialsensoreneinheit (7) über eine Schrittrichtungseinheit (21) zur Bestimmung eines Korrekturwinkels $(\sphericalangle_{rel})$ mit der Such-Navigationseinheit (5) verbindbar sind.

3. Lawinenverschüttetensuchgerät nach Anspruch 1 oder 2, **dadurch gekennzeichnet, dass** die Inertialsensoreneinheit (7) ferner über eine Sturzerkennungseinheit (20) zur Unterscheidung zwischen einem normalen Schritt und einem Sturz einer Suchperson mit der Such-Navigationseinheit (5) verbindbar ist.

4. Lawinenverschüttetensuchgerät nach einem der vorhergehenden Ansprüche 1 bis 3, **dadurch gekennzeichnet, dass** die Schrittdauerbestimmungseinheit (11) zur Bestimmung der Schrittdauer ($t_S$) zwischen einem Bandpassfilter (12) und einer Zeitdifferenzbestimmungseinheit (14) zur Erfassung eines Schrittanfangs und eines zugehörigen Schrittendes in einer parallelen Anordnung zueinander einen ersten und einen zweiten Flankendetektor (13a, b) umfasst.

5. Lawinenverschüttetensuchgerät nach Anspruch 4, **dadurch gekennzeichnet, dass** die Schrittdauerbestimmungseinheit (11) zur Bestimmung der Schrittdauer $t_S$ eine Schwellwertbestimmungseinheit (15) zur Bestimmung von Schaltschwellen des ersten bzw. des zweiten Flankendetektors (13a, b) umfasst, wobei die Schwellwertbestimmungseinheit (15) eingangsseitig mit dem Bandpassfilter (12) und ausgangsseitig mit dem ersten und dem zweiten Flankendetektor (13a, b) verbunden ist.

6. Lawinenverschüttetensuchgerät nach einem der Ansprüche 4 oder 5, **dadurch gekennzeichnet, dass** die Schrittlängenbestimmungseinheit (16) zur Ermittlung der ersten Schrittlänge ($l_{SB}$) und der zweiten Schrittlänge ($l_{SH}$) eingangsseitig mit der Zeitdifferenzbestimmungseinheit (14) zur Erfassung des Schrittanfangs und des zugehörigen Schrittendes der Schrittdauerbestimmungseinheit (11)) zur Bestimmung der Schrittdauer ($t_S$) verbunden ist und eine Schrittdauer-Distanzeinheit (17) zur Ermittlung der ersten Schrittlänge ($l_{SB}$) und eine Magnetfeld-Schrittlängeneinheit (18) zur Ermittlung der zweiten Schrittlänge ($l_{SH}$) umfasst, wobei die Schrittdauer-Distanzeinheit (17) und die Magnetfeld-Schrittlängeneinheit (18) ausgangsseitig mit der Such-Navigationseinheit (5) verbindbar sind.

7. Lawinenverschüttetensuchgerät nach Anspruch 6, **dadurch gekennzeichnet, dass** die Schrittlängenbestimmungseinheit (16) zur Ermittlung der ersten Schrittlänge ($l_{SB}$) die Konstanteneinheit (19) umfasst, die mit der Schrittdauer-Distanzeinheit (17) zur Ermittlung der ersten Schrittlänge ($l_{SB}$) aus der Schrittdauer ($t_S$), dem Kontrollwinkel ($\sphericalangle_G$) und Konstanten der Konstanteneinheit (19) verbunden ist, wobei diese eingangsseitig ebenfalls mit der Kontrollwinkeleinheit (9) der Inertialsensoreneinheit (7) und der Zeitdifferenzbestimmungseinheit (14) verbunden ist.

8. Lawinenverschüttetensuchgerät nach einem der Ansprüche 6 oder 7, **dadurch gekennzeichnet, dass** die Magnetfeld-Schrittlängeneinheit (18) zur Ermittlung der zweiten Schrittlänge ($l_{SH}$) eingangsseitig mit der Magnetfelddistanzeinheit (3, der Kontrollwinkeleinheit (9) und der Zeitdifferenzbestimmungseinheit (14) verbunden ist.

9. Verfahren zum Betrieb eines Lawinenverschüttetensuchgeräts, welches mit einer Sende-/Empfangseinheit (1) ausgestattet ist, wobei die Sende-/Empfangseinheit (1) mindestens eine Sende-/Empfangsantenne (2) zum Aussenden und Empfangen von Funksignalen umfasst, des Weiteren eine Magnetfelddistanzeinheit (3) zur Bestimmung einer Magnetfelddistanz ($D_H$) aus empfangenen Funksignalen aufweist und eine Magnetfeldwinkeleinheit (4) zur Bestim- mung eines Magnetfeldwinkels ($\sphericalangle_H$) aus der Feldvektorrichtung von empfangenen Funksignalen aufweist, wobei die Magnetfelddistanz ($D_H$) und der Magnetfeldwinkel ($\sphericalangle_H$) an eine Such-Navigationseinheit (5) übergeben werden, **dadurch gekennzeichnet,**
**dass** das Lawinenverschüttetensuchgerät ferner eine Inertialsensoreneinheit (7) umfasst, in welcher in einer Kon- trollwinkeleinheit (9) ein Kontrollwinkel ($\sphericalangle_G$) und in einem Beschleunigungssensor (10) ein Beschleunigungswert ($a_{Erde}$) ermittelt werden, wobei der Beschleunigungswert ($a_{Erde}$) einer Schrittdauerbestimmungseinheit (11) zwecks Bestimmung einer Schrittdauer ($t_S$) zugeführt wird, die nachfolgend in einer Schrittlängenbestimmungseinheit (16) der Ermittlung einer ersten Schrittlänge ($l_{SB}$) -basierend im Wesentlichen auf einem Kontrollwinkel ($\sphericalangle_G$) aus der Inertialsensoreneinheit (7), der Schrittdauer ($t_S$) und Konstanten aus einer Konstanteneinheit (19)- und der Ermittlung einer zweiten Schrittlänge ($l_{SH}$) -basierend im Wesentlichen auf dem Kontrollwinkel ($\sphericalangle_G$) aus der Inertialsen- soreneinheit (7), der Schrittdauer ($t_S$) und der Magnetfelddistanz ($D_H$)- dient und der Such-Navigationseinheit (5) übergeben werden.

10. Verfahren zum Betrieb eines Lawinenverschüttetensuchgeräts nach Anspruch 9, **dadurch gekennzeichnet, dass** die Schrittlängenbestimmungseinheit (16) zur Ermittlung der ersten Schrittlänge ($l_{SB}$) eine Schrittdauer-Distanzeinheit (17) umfasst, die eingangsseitig die Schrittdauer ($t_S$) aus einer Zeitdifferenzbestimmungseinheit (14) zur Erfassung eines Schrittanfangs und eines zugehörigen Schrittendes der Schrittdauerbestimmungseinheit (11) empfängt, wobei die Schrittdauer-Distanzeinheit (17) zudem mit der Konstanteneinheit (19) verbunden ist und ferner den Kontrollwinkel ($\sphericalangle_G$) aus der Kontrollwinkeleinheit (9) empfängt, um die erste Schrittlänge ($l_{SB}$) zu ermitteln und an die Such-Navigationseinheit (5) auszugeben.

**11.** Verfahren zum Betrieb eines Lawinenverschüttetensuchgeräts nach Anspruch 9, **dadurch gekennzeichnet, dass** die Schrittlängenbestimmungseinheit (16) eine Magnetfeld-Schrittlängeneinheit (18) zur Ermittlung der zweiten Schrittlänge $l_{SH}$ umfasst, wobei die Magnetfeld-Schrittlängeneinheit (18) eingangsseitig die Schrittdauer ($t_S$) aus einer Zeitdifferenzbestimmungseinheit (14) der Schrittdauerbestimmungseinheit (11) empfängt, wobei die Magnetfeld-Schrittlängeneinheit (18) ebenfalls die Magnetfelddistanz ($D_H$) aus der Magnetfelddistanzeinheit (3) und den Kontrollwinkel ($\sphericalangle_G$) aus einer Kontrollwinkeleinheit (9) der Inertialsensoreneinheit (7) empfängt, um die zweite Schrittlänge ($l_{SH}$) zu ermitteln und an die Such-Navigationseinheit (5) auszugeben.

**12.** Verfahren zum Betrieb eines Lawinenverschüttetensuchgeräts nach einem der Ansprüche 9 bis 11, **dadurch gekennzeichnet, dass** die Schrittdauerbestimmungseinheit (11) zwischen einem Bandpassfilter (12) und einer Zeitdifferenzbestimmungseinheit (14) zur Erfassung eines Schrittanfangs und eines zugehörigen Schrittendes in einer parallelen Anordnung zueinander einen ersten und einen zweiten Flankendetektor (13a, b) umfasst.

**13.** Verfahren zum Betrieb eines Lawinenverschüttetensuchgeräts nach Anspruch 12, **dadurch gekennzeichnet, dass** die Schrittdauerbestimmungseinheit (11) eine Schwellwertbestimmungseinheit (15) zur Bestimmung von Schaltschwellen des ersten bzw. des zweiten Flankendetektors (13a, b) umfasst, die eingangsseitig mit dem Bandpassfilter (12) und ausgangsseitig mit dem ersten und dem zweiten Flankendetektor (13a, b) verbunden ist.

**14.** Verfahren zum Betrieb eines Lawinenverschüttetensuchgeräts nach einem der Ansprüche 9 bis 13, **dadurch gekennzeichnet, dass** der Magnetfeldwinkel ($\sphericalangle_H$) und der Kontrollwinkel ($\sphericalangle_G$) einer Schrittrichtungseinheit (21) zugeführt werden, die einen Korrekturwinkel ($\sphericalangle_{rel}$) ermittelt und diesen an die Such-Navigationseinheit (5) weiterleitet.

**15.** Verfahren zum Betrieb eines Lawinenverschüttetensuchgeräts nach einem der Ansprüche 9 bis 14, **dadurch gekennzeichnet, dass** der Beschleunigungswert ($a_{Erde}$) einer Sturzerkennungseinheit (20) zugeführt wird, die mit der Such-Navigationseinheit (5) verbindbar ist.

**16.** Verfahren zum Betrieb eines Lawinenverschüttetensuchgeräts nach einem der Ansprüche 9 bis 15, **dadurch gekennzeichnet, dass** nach der Bestimmung der Magnetfelddistanz ($D_H$) und der Bestimmung des Magnetfeldwinkels ($\sphericalangle_H$) beide Werte als Referenzwerte dienen und basierend darauf die Navigation einer Suchperson mittels des Kontrollwinkels ($\sphericalangle_G$), des Beschleunigungswerts ($a_{Erde}$), der daraus ermittelten Schrittdauer ($t_S$) und der ersten Schrittlänge ($l_{SB}$) erfolgt.

**Claims**

**1.** Avalanche transceiver, comprising a transmitting/receiving unit (1), at least one transmitting/receiving antenna (2), a magnetic field distance unit (3) for determining a magnetic field distance ($D_H$) from received radio signals and a magnetic field angle unit (4) for determining a magnetic field angle ($\sphericalangle_H$) from the field vector direction of received radio signals, wherein the magnetic field distance unit (3) and the magnetic field angle unit (4) are connectable on the output side to a search navigation unit (5) and to a downstream display (6), **characterized in that** the avalanche transceiver furthermore comprises an inertial sensor unit (7), which is connectable on the output side to the search navigation unit (5) via a step duration determination unit (11) for determining a step duration ($t_S$) and via a step length determination unit (16) for ascertaining a first step length ($l_{SB}$) - based substantially on a control angle ($\sphericalangle_G$) from the inertial sensor unit (7), the step duration ($t_S$) and constants from a constant unit (19) - and for ascertaining a second step length ($l_{SH}$) - based substantially on the control angle ($\sphericalangle_G$) from the inertial sensor unit (7), the step duration ($t_S$) and the magnetic field distance ($D_H$).

2. Avalanche transceiver according to Claim 1, **characterized in that** the magnetic field angle unit (4) for determining the magnetic field angle ($\sphericalangle_H$) from the field vector direction of received radio signals and the inertial sensor unit (7) are connectable to the search navigation unit (5) via a step direction unit (21) for determining a correction angle ($\sphericalangle_{rel}$).

3. Avalanche transceiver according to Claim 1 or 2, **characterized in that** the inertial sensor unit (7) is furthermore connectable to the search navigation unit (5) via a fall detection unit (20) for distinguishing between a normal step and the fall of a searcher.

4. Avalanche transceiver according to one of the preceding Claims 1 to 3, **characterized in that** the step duration determination unit (11) for determining the step duration ($t_S$) comprises a first and a second flank detector (13a, b) between a bandpass filter (12) and a time difference determination unit (14) for detecting the beginning of a step and an associated end of the step in a parallel arrangement with respect to one another.

5. Avalanche transceiver according to Claim 4, **characterized in that** the step duration determination unit (11) for determining the step duration ($t_S$) comprises a threshold value determination unit (15) for determining switching thresholds of the first and of the second flank detector (13a, b), wherein the threshold value determination unit (15) is connected on the input side to the bandpass filter (12) and on the output side to the first and the second flank detector (13a, b).

6. Avalanche transceiver according to either of Claims 4 and 5, **characterized in that** the step length determination unit (16) for determining the first step length ($l_{SB}$) and the second step length ($l_{SH}$) is connected on the input side to the time difference determination unit (14) for determining the beginning of a step and the associated end of the step of the step duration determination unit (11) for determining the step duration ($t_S$) and comprises a step duration distance unit (17) for ascertaining the first step length ($l_{SB}$) and a magnetic field step length unit (18) for ascertaining the second step length ($l_{SH}$), wherein the step duration distance unit (17) and the magnetic field step length unit (18) are connectable to the search navigation unit (5) on the output side.

7. Avalanche transceiver according to Claim 6, **characterized in that** the step length determination unit (16) for determining the first step length ($l_{SB}$) comprises the constant unit (19), which is connected to the step duration distance unit (17) for ascertaining the first step length ($l_{SB}$) from the step duration ($t_S$), the control angle ($\sphericalangle_G$) and constants of the constant unit (19), wherein said unit is also connected on the input side to the control angle unit (9) of the inertial sensor unit (7) and the time difference determination unit (14).

8. Avalanche transceiver according to either of Claims 6 and 7, **characterized in that** the magnetic field step length unit (18) for ascertaining the second step length ($l_{SH}$) is connected on the input side to the magnetic field distance unit (3), the control angle unit (9) and the time difference determination unit (14).

9. Method for operating an avalanche transceiver, which is equipped with a transmitting/receiving unit (1), wherein the transmitting/receiving unit (1) comprises at least one transmitting/receiving antenna (2) for transmitting and receiving radio signals, furthermore has a magnetic field distance unit (3) for determining a magnetic field distance ($D_H$) from received radio signals and has a magnetic field angle unit (4) for determining a magnetic field angle ($\sphericalangle_H$) from the field vector direction of received radio signals, wherein the magnetic field distance ($D_H$) and the magnetic field angle ($\sphericalangle_H$) are transferred to a search navigation unit (5), **characterized in that** the avalanche transceiver furthermore comprises an inertial sensor unit (7), in which a control angle ($\sphericalangle_G$) is ascertained in a control angle unit (9) and an acceleration value ($a_{Erde}$) is ascertained in an acceleration sensor (10), wherein the acceleration value ($a_{Erde}$) is supplied to a step duration determination unit (11) for the purpose of determining a step duration ($t_S$) which subsequently serves in a step length determination unit (16) for ascertaining a first step length ($l_{SB}$) - based substantially on a control angle ($\sphericalangle_G$) from the inertial sensor unit (7), the step duration ($t_S$) and constants from a constant unit (19) - and for ascertaining a second step length ($l_{SH}$) - based substantially on the control angle ($\sphericalangle_G$) from the inertial sensor unit (7), the step duration ($t_S$) and the magnetic field distance ($D_H$) - and are transferred to the search navigation unit (5).

10. Method for operating an avalanche transceiver according to Claim 9, **characterized in that** the step length determination unit (16) for ascertaining the first step length ($l_{SB}$) comprises a step duration distance unit (17) which receives on the input side the step duration ($t_S$) from a time difference determination unit (14) for capturing the beginning of a step and an associated end of the step of the step duration determination unit (11), wherein the step duration distance unit (17) is additionally connected to the constant unit (19) and furthermore receives the control angle ($\sphericalangle_G$) from the control angle unit (9) to ascertain the first step length ($l_{SB}$) and to output it to the search navigation unit (5).

11. Method for operating an avalanche transceiver according to Claim 9, **characterized in that** the step length determination unit (16) comprises a magnetic field step length unit (18) for ascertaining the second step length ($l_{SH}$), wherein the magnetic field step length unit (18) receives on the input side the step duration ($t_S$) from a time difference determination unit (14) of the step duration determination unit (11), wherein the magnetic field step length unit (18) likewise receives the magnetic field distance ($D_H$) from the magnetic field distance unit (3) and the control angle ($\sphericalangle_G$) from a control angle unit (9) of the inertial sensor unit (7) in order to ascertain the second step length ($l_{SH}$) and to transfer it to the search navigation unit (5).

12. Method for operating an avalanche transceiver according to one of Claims 9 to 11, **characterized in that** the step duration determination unit (11) comprises a first and a second flank detector (13a, b) between a bandpass filter (12) and a time difference determination unit (14) for ascertaining the beginning of a step and an associated end of the step in a parallel arrangement with respect to one another.

13. Method for operating an avalanche transceiver according to Claim 12, **characterized in that** the step duration determination unit (11) comprises a threshold value determination unit (15) for determining switching thresholds of the first and the second flank detector (13a, b), which threshold value determination unit (15) is connected on the input side to the bandpass filter (12) and on the output side to the first and the second flank detector (13a, b).

14. Method for operating an avalanche transceiver according to one of Claims 9 to 13, **characterized in that** the magnetic field angle ($\sphericalangle_H$) and the control angle ($\sphericalangle_G$) are supplied to a step direction unit (21), which ascertains a correction angle ($\sphericalangle_{rel}$) and transfers it to the search navigation unit (5).

15. Method for operating an avalanche transceiver according to one of Claims 9 to 14, **characterized in that** the acceleration value ($a_{Erde}$) is supplied to a fall detection unit (20), which is connectable to the search navigation unit (5).

16. Method for operating an avalanche transceiver according to one of Claims 9 to 15, **characterized in that**, after the determination of the magnetic field distance ($D_H$) and the determination of the magnetic field angle ($\sphericalangle_H$), both values serve as reference values and, based thereon, the navigation of a searcher is effected by way of the control angle ($\sphericalangle_G$), the acceleration value ($a_{Erde}$), the step duration ($t_S$) ascertained therefrom and the first step length ($l_{SB}$).

**Revendications**

1. Appareil de recherche de victimes d'avalanche comprenant une unité d'émission/réception (1), au moins une antenne d'émission/réception (2), une unité de détermination de distance de champ magnétique (3) destinée à déterminer une distance du champ magnétique ($D_H$) à partir de signaux radio reçus et une unité de détermination d'angle de champ magnétique (4) destinée à déterminer un angle de champ magnétique $(\sphericalangle_H)$ à partir de la direction du vecteur de champ de signaux radio reçus, dans lequel l'unité de détermination de distance de champ magnétique (3) et l'unité de détermination d'angle de champ magnétique (4) peuvent être reliées côté sortie à une unité de navigation de recherche (5) et à un afficheur (6) situé en aval, **caractérisé en ce que** l'appareil de recherche de victimes d'avalanche comprend en outre une unité à capteur inertiel (7) qui peut être reliée côté sortie à l'unité de navigation de recherche (5) par l'intermédiaire d'une unité de détermination de durée de pas (11) destinée à déterminer une durée de pas $(t_S)$ et par l'intermédiaire d'une unité de détermination de longueur de pas (16) destinée à déterminer une première longueur de pas $(l_{SB})$ - en se basant essentiellement sur un angle de contrôle $(\sphericalangle_G)$ provenant de l'unité à capteur inertiel (7), sur la durée de pas $(t_S)$ et sur des constantes provenant d'une unité génératrice de constantes (19) - et à déterminer une deuxième longueur de pas $(l_{SH})$ - en se basant essentiellement sur un angle de contrôle $(\sphericalangle_G)$ provenant de l'unité à capteur inertiel (7), sur la durée de pas $(t_S)$ et sur la distance du champ magnétique $(D_H)$.

2. Appareil de recherche de victimes d'avalanche selon la revendication 1, **caractérisé en ce que** l'unité de détermination d'angle de champ magnétique (4) destinée à déterminer l'angle de champ magnétique $(\sphericalangle_H)$ à partir de la direction du vecteur de champ des signaux radio reçus et l'unité à capteur inertiel (7) peuvent être reliées à l'unité de navigation de recherche (5) par l'intermédiaire d'une unité de détermination de direction de pas (21) destinée à déterminer un angle de correction $(\sphericalangle_{rel})$.

3. Appareil de recherche de victimes d'avalanche selon la revendication 1 ou 2, **caractérisé en ce que** l'unité à capteur inertiel (7) peut également être reliée à l'unité de navigation de recherche (5) par l'intermédiaire d'une unité de détection de chute (20) permettant de faire la distinction entre un pas normal et la chute d'une personne recherchée.

4. Appareil de recherche de victimes d'avalanche selon l'une quelconque des revendications 1 à 3 précédentes, **caractérisé en ce que** l'unité de détermination de durée de pas (11) destinée à déterminer la durée de pas $(t_S)$ comprend des premier et deuxième détecteurs de fronts (13a, b) agencés parallèlement l'un à l'autre entre un filtre passe-bande (12) et une unité de détermination de différence de temps (14) destinée à détecter un début de pas et une fin de pas associée.

5. Appareil de recherche de victimes d'avalanche selon la revendication 4, **caractérisé en ce que** l'unité de détermination de durée de pas (11) destinée à déterminer la durée de pas $(t_S)$ est une unité de détermination de valeurs de seuils (15) destinée à déterminer des seuils de commutation du premier ou du deuxième détecteur de fronts (13a, b), dans lequel l'unité de détermination de valeurs de seuils (15) est reliée côté entrée au filtre passe-bande (12) et côté sortie aux premier et deuxième détecteurs de fronts (13a, b).

6. Appareil de recherche de victimes d'avalanches selon l'une quelconque des revendications 4 ou 5, **caractérisé en ce que** l'unité de détermination de longueur de pas (16) destiné à déterminer la première longueur de pas $(l_{SB})$ et la deuxième longueur de pas $(l_{SH})$ est reliée côté entrée à l'unité de détermination de différence de temps (14) destinée à détecter le début de pas et la fin de pas associée de l'unité de détermination de durée de pas (11) destinée à déterminer la durée de pas $(t_S)$, et comprend une unité de détermination de durée de pas et de distance (16) destinée à déterminer la première longueur de pas $(l_{SB})$ et une unité de détermination de longueur de pas par champ magnétique (18) destinée à déterminer la deuxième longueur de pas $(l_{SH})$, dans lequel l'unité de détermination de durée de pas et de distance (17) et l'unité de détermination de longueur de pas par champ magnétique (18) peuvent être reliées côté sortie à l'unité de navigation de recherche (5).

7. Appareil de recherche de victimes d'avalanche selon la revendication 6, **caractérisé en ce que** l'unité de détermination de longueur de pas (16) destiné à déterminer la première longueur de pas $(l_{SB})$ comprend l'unité génératrice de constantes (19) qui est reliée à l'unité de détermination de durée de pas et de distance (17) destinée à déterminer la première longueur de pas $(l_{SB})$ à partir de la durée de pas $(t_S)$, de l'angle de contrôle $(\sphericalangle_G)$ et de constantes de l'unité génératrice de constantes (19), dans lequel ladite unité de détermination de longueur de pas est également reliée, côté entrée, à l'unité de détermination d'angle de contrôle (9), à l'unité à capteur inertiel (7) et à l'unité de détermination de différence de temps (14).

**8.** Appareil de recherche de victimes d'avalanche selon l'une quelconque des revendications 6 ou 7, **caractérisé en ce que** l'unité de détermination de longueur de pas par champ magnétique (18) destinée à déterminer la deuxième longueur de pas ($I_{SH}$) est reliée côté entrée à l'unité de détermination de champ magnétique (3), à l'unité de détermination d'angle de contrôle (9) et à l'unité de détermination de différence de temps (14).

**9.** Procédé de mise en fonctionnement d'un appareil de recherche de victimes d'avalanche équipé d'une unité d'émission/réception (1), dans lequel l'unité d'émission/réception (1) comprend au moins une antenne d'émission/réception (2) destinée à émettre et à recevoir des signaux radio, comporte en outre une unité de détermination de distance de champ magnétique (3) destinée à déterminer une distance du champ magnétique ($D_H$) à partir de signaux radio reçus et une unité de détermination d'angle de champ magnétique (4) destinée à déterminer un angle de champ magnétique $(\sphericalangle_H)$ à partir de la direction du vecteur de champ de signaux radio reçus, dans lequel la distance du champ magnétique ($D_H$) et l'angle du champ magnétique $(\sphericalangle_H)$ sont transférés à une unité de navigation de recherche (5),

**caractérisé en ce que** l'appareil de recherche de victimes d'avalanche comprend en outre une unité à capteur inertiel (7) dans laquelle un angle de contrôle $(\sphericalangle_G)$ est déterminé dans une unité de détermination d'angle de contrôle (9) et une valeur d'accélération ($a_{Erde}$) est déterminée dans un capteur d'accélération (10), dans lequel la valeur d'accélération ($a_{Erde}$) est fournie à une unité de détermination de durée de pas (11) destinée à déterminer une durée de pas ($t_S$), qui sert ensuite, dans une unité de détermination de longueur de pas (16), à déterminer une première longueur de pas ($I_{SB}$) - en se basant essentiellement sur un angle de contrôle $(\sphericalangle_G)$ provenant de l'unité à capteur inertiel (7), sur la durée de pas ($t_S$) et sur des constantes provenant d'une unité génératrice de constantes (19) - et à déterminer une deuxième longueur de pas ($I_{SB}$) - en se basant essentiellement sur l'angle de contrôle $(\sphericalangle_G)$ provenant de l'unité à capteur inertiel (7), sur la durée de pas ($t_S$) et sur la distance du champ magnétique ($D_H$) - et sont transférées à l'unité de navigation de recherche.

**10.** Procédé de mise en fonctionnement d'un appareil de recherche de victimes d'avalanche selon la revendication 9, **caractérisé en ce que** l'unité de détermination de longueur de pas (16) destinée à déterminer la première longueur de pas ($I_{SB}$) comprend une unité de détermination de durée de pas et de distance (17) qui reçoit côté entrée la durée de pas ($t_S$) en provenance d'une unité de détermination de différence de temps (14) destinée à détecter un début de pas et une fin de pas associée de l'unité de détermination de durée de pas (11), dans lequel l'unité de détermination de durée de pas et de distance (17) est également reliée à l'unité génératrice de constantes (19) et reçoit en outre l'angle de contrôle $(\sphericalangle_G)$ en provenance de l'unité de détermination d'angle de contrôle (9) pour déterminer la première longueur de pas ($I_{SB}$) et pour l'envoyer à l'unité de navigation de recherche (5).

**11.** Procédé de mise en fonctionnement d'un appareil de recherche de victimes d'avalanche selon la revendication 9, **caractérisé en ce que** l'unité de détermination de longueur de pas (16) comprend une unité de détermination de longueur de pas par champ magnétique (18) destinée à déterminer la deuxième longueur de pas ($I_{SH}$), dans lequel l'unité de détermination de longueur de pas par champ magnétique (18) reçoit côté entrée la durée de pas ($t_S$) en provenance d'une unité de détermination de différence de temps (14) de l'unité de détermination de durée de pas (11), dans lequel l'unité de détermination de longueur de pas par champ magnétique (18) reçoit également la distance du champ magnétique ($D_H$) en provenance de l'unité de détermination de distance de champ magnétique (3) et l'angle de contrôle $(\sphericalangle_G)$ en provenance d'une unité de détermination d'angle de contrôle (9) de l'unité à capteur inertiel (7) afin de déterminer la deuxième longueur de pas ($I_{SH}$) et de la délivrer à l'unité de navigation de recherche (5).

**12.** Procédé de mise en fonctionnement d'un appareil de recherche de victimes d'avalanche selon l'une quelconque des revendications 9 à 11, **caractérisé en ce que** l'unité de détermination de durée de pas (11) comprend des premier et deuxième détecteurs de fronts (13a, b) agencés parallèlement l'un à l'autre entre un filtre passe-bande (12) et une unité de détermination de différence de temps (14) destinée à détecter un début de pas et une fin de pas associée.

**13.** Procédé de mise en fonctionnement d'un appareil de recherche de victimes d'avalanche selon la revendication 12, **caractérisé en ce que** l'unité de détermination de durée de pas (11) est une unité de détermination de valeurs de seuils (15) destinée à déterminer des seuils de commutation du premier ou du deuxième seuil du deuxième détecteur de fronts (13a, b), qui est reliée côté entrée au filtre passe-bande (12) et côté sortie aux premier et deuxième détecteurs de fronts (13a, b).

**14.** Procédé de mise en fonctionnement d'un appareil de recherche de victimes d'avalanche selon l'une quelconque des revendications 9 à 13, **caractérisé en ce que** l'angle de champ magnétique $(\sphericalangle_H)$ et l'angle de contrôle $(\sphericalangle_G)$ sont fournis à une unité de détermination de direction de pas (21) qui détermine un angle de correction $(\sphericalangle_{rel})$ et le transmet à l'unité de navigation de recherche (5).

**15.** Procédé de mise en fonctionnement d'un appareil de recherche de victimes d'avalanche selon l'une quelconque des revendications 9 à 14, **caractérisé en ce que** la valeur d'accélération ($a_{Erde}$) est fournie à une unité de détection de chute (20) qui peut être reliée à l'unité de navigation de recherche (5).

**16.** Procédé de mise en fonctionnement d'un appareil de recherche de victimes d'avalanche selon l'une quelconque des revendications 9 à 15, **caractérisé en ce qu'**après la détermination de la distance du champ magnétique ($D_H$) et la détermination de l'angle du champ magnétique $(\sphericalangle_H)$, ces deux valeurs servent de valeurs de référence et, à partir de celles-ci, la navigation d'une personne recherchée est effectuée au moyen de l'angle de contrôle $(\sphericalangle_G)$, de la valeur d'accélération ($a_{Erde}$), de la durée de pas ($t_S$) qui en résulte et de la première longueur de pas ($l_{SH}$).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5583776 A, Levi

- CH 703352 A1